# EUROPÄISCHE PATENTANMELDUNG

(11) **EP 4 592 096 A1**
(43) Veröffentlichungstag der Anmeldung: **30.07.2025**
(21) Anmeldenummer: 25151247.1
(22) Anmeldetag: 10.01.2025
(51) Int. Cl.: B60C 11/03, B60C 11/12

(54) **FAHRZEUGREIFEN**

(30) Priorität: 26.01.2024 DE 102024200712
(71) Anmelder: Continental Reifen Deutschland GmbH, 30175 Hannover (DE)
(72) Erfinder: Seng, Matthias, 30175 Hannover (DE); Subramanian Sivanarutchelvi, Manickaraj, 30175 Hannover (DE); Bauer, Claudia, 30175 Hannover (DE); Heinhaupt, Torsten, 30175 Hannover (DE); Brandau, Christian, 30175 Hannover (DE); Brockmann, Jürgen, 30175 Hannover (DE)
(74) Vertreter: Continental Corporation

(57) **Zusammenfassung**

Fahrzeugreifen mit einem laufrichtungsgebunden gestalteten Laufstreifen (1) mit einer spiegelsymmetrisch zur Mittelumfangslinie (A-A) des Laufstreifens (1) gestalteten Profilierung mit zwei schulterseitigen Blockreihen (2) und zwischen diesen, durch Umfangsrillen (5) voneinander getrennt, angeordneten weiteren Blockreihen (3, 4), wobei Querrillen (6) vorgesehen sind, welche jeweils annähernd gemäß einer einzigen Wellenlänge einer sinusartigen Welle mit einer einzigen Wellenbergspitze an der Mittelumfangslinie (A-A) verlaufen.

Der Laufstreifen (1) weist eine zentrale, entlang der Mittelumfangslinie (A-A) des Laufstreifens (1) verlaufende Blockreihe (4) und zwischen dieser und den schulterseitigen Blockreihen (2) jeweils eine mittlere Blockreihe (3) auf, wobei die zentrale Blockreihe (4) eine in die axiale Richtung projizierte größte Breite (B₄) von 10 % bis 15 % der Breite (B) des Laufstreifens (1) aufweist und die schulterseitigen Blockreihen (2) die größte Breite (B₂) von allen Blockreihen (2, 3, 4) aufweisen.

## Beschreibung

Die Erfindung betrifft einen Fahrzeugreifen mit einem laufrichtungsgebunden gestalteten Laufstreifen mit einer spiegelsymmetrisch oder annähernd spiegelsymmetrisch zur Mittelumfangslinie des Laufstreifens gestalteten Profilierung mit zwei schulterseitigen Blockreihen und zwischen diesen, durch Umfangsrillen voneinander getrennt, angeordneten weiteren Blockreihen, wobei sämtliche Blockreihen durch die Umfangsrillen und durch über die Breite des Laufstreifens in der Bodenaufstandsfläche durchgehend und parallel zueinander verlaufende Querrillen in Profilblöcke gegliedert sind, wobei die Querrillen jeweils annähernd gemäß einer einzigen Wellenlänge einer sinusartigen Welle mit einer einzigen Wellenbergspitze an der Mittelumfangslinie verlaufen.

Ein derartiger Fahrzeugreifen ist beispielsweise aus der DE 10 2018 218 252 A1 bekannt. Der Laufstreifen des Fahrzeugreifens weist eine Profilierung aus zwei schulterseitigen Blockreihen und zwei zwischen diesen verlaufenden weiteren Blockreihen auf, welche durch eine entlang der zentralen Mittelumfangslinie in Umfangsrichtung gerade verlaufende Umfangsrille voneinander getrennt sind. Die Blockreihen sind durch parallel zueinander verlaufende Querrillen in Profilblöcke gegliedert, welche mit an die Querrillen angrenzenden, zur Laufstreifenperipherie offenen Vertiefungen versehen sind. Die Querrillenabschnitte in den Blockreihen setzen sich jeweils aus zwei Teilabschnitten zusammen, welche miteinander einen stumpfen Winkel einschließen und an einer Knickstelle mit einer Knickaußenseite und einer Knickinnenseite aneinander anschließen, wobei die Vertiefungen im Bereich der Knickaußenseite der Knickstellen ausgebildet sind. Ein derart gestalteter Laufstreifen soll eine wirkungsvolle Verzahnung des sich in den Querrillen im Bereich der Vertiefungen ansammelnden Schnees bewirken, sodass ein guter Schneegriff eines Reifens mit einem derartigen Laufstreifen sichergestellt sein soll, wobei auf Nässe Wasser auf eine verwirbelungsarme Weise über die Knickstellen hinweg zu einer Umfangsrille abgeleitet werden soll.

Der Erfindung liegt die Aufgabe zugrunde, einen Laufstreifen der eingangs genannten Art unter Erhalt der Winterperformance, insbesondere guter Schneegriffeigenschaften und eines guten Wasserableitvermögens, hinsichtlich des Ansprechens auf Lenkkräfte und der Handlingeigenschaften auf mit Schnee bedecktem und auf trockenem Untergrund zu verbessern.

Gelöst wird die gestellte Aufgabe erfindungsgemäß dadurch, dass der Laufstreifen eine zentrale, entlang der Mittelumfangslinie des Laufstreifens verlaufende Blockreihe und zwischen dieser und den schulterseitigen Blockreihen jeweils eine mittlere Blockreihe aufweist, wobei die zentrale Blockreihe eine in die axiale Richtung projizierte Breite von 12 % bis 16 % der Breite des Laufstreifens aufweist und die schulterseitigen Blockreihen die größte Breite von allen Blockreihen aufweisen.

Anstelle einer breiten Umfangsrille weist daher der Laufstreifen gemäß der Erfindung eine relativ breite zentrale Blockreihe, welche den Laufstreifen im mittleren Bereich vorteilhaft versteift, und bei den Reifenschultern die breitesten Blockreihen auf, wodurch das Ansprechen des Reifens auf Lenkkräfte merklich verbessert und damit auch die Handlingeigenschaften, insbesondere auf schneeigem aber auch auf trockenem Untergrund, verbessert sind.

Bei einer bevorzugten Ausführung weisen die schulterseitigen Blockreihen eine in die axiale Richtung projizierte größte Breite von 23 % bis 30 % der Breite des Laufstreifens und die mittleren Blockreihen eine in die axiale Richtung projizierte größte Breite von 15 % bis 18 % der Breite des Laufstreifens auf. Je weiter die Blockreihen laufstreifenaußenseitig positioniert sind umso größer ist ihre Breite bzw. die Breite ihrer Profilblöcke. Durch diese Maßnahme lassen sich besonders ausgewogene Handlingeigenschaften erzielen.

Gute Griffeigenschaften auf Schnee und auf Nässe werden ferner dadurch unterstützt, dass sämtliche zwischen den Profilblöcken verlaufenden Rillenabschnitte der Querrillen gerade verlaufen, wobei die Mittellinien der Rillenabschnitte in den schulterseitigen Blockreihen mit der Umfangsrichtung jeweils einen Winkel einschließen, welcher 75° bis 85° beträgt und die Mittellinien der Rillenabschnitte der Querrillen in den mittleren Blockreihen jeweils unter einem Winkel von 55° bis 65° zur Umfangsrichtung verlaufen.

Gemäß einer weiteren bevorzugten Ausführung setzen sich die Rillenabschnitte in der zentralen Blockreihe jeweils symmetrisch zur Mittelumfangslinie aus zwei gerade verlaufenden Teilabschnitten zusammen, die an der Mittelumfangslinie flach V-förmig zueinander verlaufend aneinander anschließen und Mittellinien aufweisen, die mit der Umfangsrichtung des Laufstreifens, gegensinnig zueinander geneigt, jeweils einen Winkel einschließen, welcher 70° bis 80° beträgt. Diese Rillenabschnitte leisten einerseits einen Beitrag zur Wasserableitung aus der Laufstreifenmitte und sind andererseits für ein geringes Abrollgeräusch, insbesondere durch ihre flach V-förmige Anordnung, von Vorteil.

Für eine besonders wirksame Ableitung von Wasser auf Nässe ist es darüber hinaus vorteilhaft, wenn die Rillenabschnitte in der zentralen Blockreihe eine zwischen ihren Randkanten an der Laufstreifenperipherie ermittelte konstante Breite von 4,00 mm bis 5,00 mm aufweisen, wobei diese Breite geringer ist als die Breite der Rillenabschnitte der Querrillen in den mittleren und den schulterseitigen Blockreihen. Die Breite der Rillenabschnitte der Querrillen nimmt daher von der Laufstreifenmitte bis zu den Reifenschultern zu, wodurch die Wasserableitung zu den Laufstreifenaußenseiten besonders vorteilhaft unterstützt wird.

Auch die Umfangsrillen leisten einen Beitrag zu einer guten Wasserdrainage und gleichzeitig einen Beitrag zu guten Griffeigenschaften auf Schnee, indem sie jeweils eine zwischen ihren Randkanten an der Laufstreifenperipherie ermittelte konstante Breite aufweisen, die 4,50 mm bis 10,00 mm beträgt und indem sie sich innerhalb ihrer zwischen einander benachbarten Profilblöcken verlaufenden Abschnitten aus jeweils zwei zur Umfangsrichtung unter einem Winkel von 2° bis 5° orientierten langen Teilabschnitten und einem diese verbindenden kurzen Teilabschnitt zusammensetzen, welcher unter einem Winkel von 25° bis 35° zur Umfangsrichtung verläuft, wobei die Teilabschnitte sämtlich derart gestaltet sind, dass über den Umfang des Laufstreifens eine nicht unterbrochene Durchsicht durch die Umfangsrillen, ein sogenannter "look-through", möglich ist.

Weitere Merkmale, Vorteile und Einzelheiten der Erfindung werden nun anhand der schematischen Zeichnung, die ein Ausführungsbeispiel darstellt, näher beschrieben. Dabei zeigt die einzige Zeichnungsfigur,

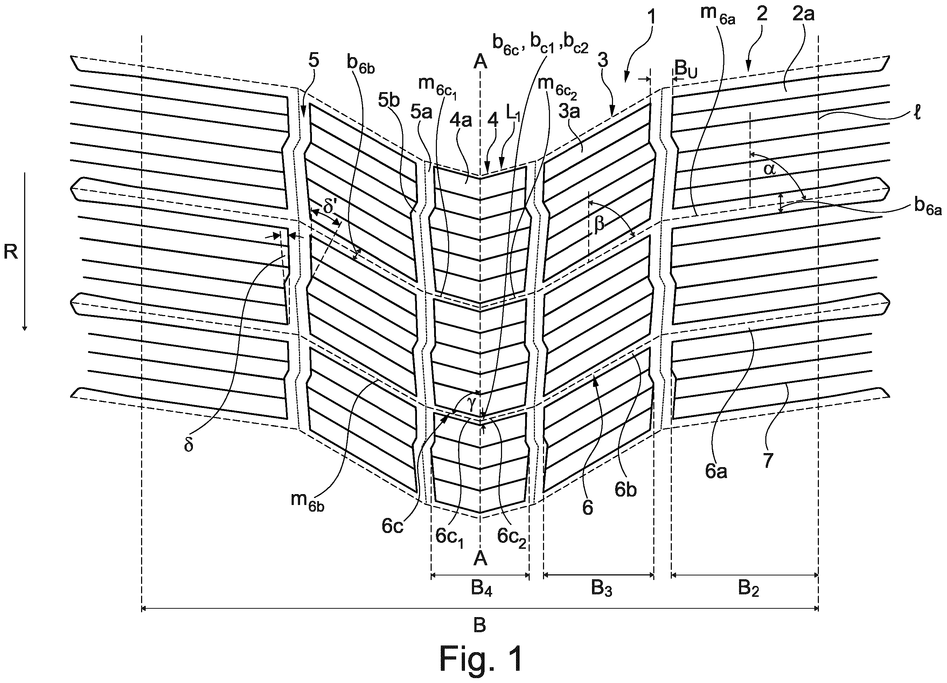

Fig. 1, eine Draufsicht auf einen Aufschnitt eines Umfangsabschnitts (als Abwicklung in die Ebene) eines Laufstreifens eines Fahrzeugreifens mit einer Ausführungsvariante der Erfindung.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart für Felgen mit einem ganzzahligen Felgendurchmesser von 13 Zoll bis 24 Zoll, insbesondere von 18 Zoll bis 23 Zoll, wobei die Reifen zum Fahren unter winterlichen Fahrbedingungen als Winterreifen oder Ganzjahresreifen vorgesehen sind.

Fig. 1 zeigt einen Ausschnitt eines Umfangsabschnitts eines Laufstreifens, welcher mit einer laufrichtungsgebunden ausgeführten Profilierung versehen ist, sodass ein Fahrzeugreifen mit einem derartigen Laufstreifen in einer bestimmten Abrollrichtung bei Vorwärtsfahrt zu montieren ist. Der in Fig. 1 am linken Rand des Laufstreifens eingezeichnete Pfeil R symbolisiert die Abrollrichtung bei Vorwärtsfahrt. Die Linie A-A kennzeichnet die Äquatorialebene und damit die zentrale Mittelumfangslinie des Laufstreifens 1, dessen Profilierung bezüglich dieser Linie spiegelsymmetrisch oder annähernd spiegelsymmetrisch gestaltet ist. Die Bodenaufstandsfläche des Laufstreifens entspricht dem statisch ermittelten Footprint (ermittelt mit einem auf einer Normfelge montierten Reifen, Last bei 70 % der maximalen Tragfähigkeit, Innendruck 85 % des Normdrucks, gemäß E.T.R.T.O.-Standards) und weist in axialer Richtung eine größte Breite B auf, wobei die seitlichen Laufstreifenränder mit L bezeichnet sind.

Die Profilierung des Laufstreifens 1, die in der Beschreibung und in den Patentansprüchen innerhalb der Breite B betrachtet wird, setzt sich aus zwei schulterseitigen Blockreihen 2, einer zentralen, entlang der Mittelumfangslinie A-A verlaufenden Blockreihe 4 und in jeder Laufstreifenhälfte aus je einer zwischen der schulterseitigen Blockreihe 2 und der zentralen Blockreihe 4 angeordneten mittleren Blockreihe 3 zusammen. Die Blockreihen 2, 3 und 4 sind durch in Umfangsrichtung umlaufende Umfangsrillen 5 voneinander getrennt, welche, abgesehen von Stellen, an welchen gegebenenfalls Tread Wear Indikatoren ausgebildet sind, in der jeweils vorgesehenen maximalen Profiltiefe ausgeführt sind, welche für die eingangs erwähnten bevorzugten Reifentypen in der Größenordnung von 6,00 mm bis 11,00 mm beträgt.

In der Umfangsrichtung des Laufstreifens 1 parallel zueinander verlaufende und symmetrisch zur Mittelumfangslinie A-A ausgeführte Querrillen 6 gliedern gemeinsam mit den erwähnten Umfangsrillen 5 die schulterseitigen Blockreihen 2 in Profilblöcke 2a, die mittleren Blockreihen 3 in Profilblöcke 3a und die zentrale Blockreihe 4 in Profilblöcke 4a. Die Querrillen 6 verlaufen über die Breite B jeweils annähernd gemäß einer einzigen Wellenlänge einer sinusartigen Welle mit einer einzigen Wellenbergspitze an der Mittelumfangslinie A-A und mit Rillenabschnitten 6a in den schulterseitigen Blockreihen 2, Rillenabschnitten 6b in den mittleren Blockreihen 3 und Rillenabschnitten 6c in der zentralen Blockreihe 4. Die Rillenabschnitte 6a verlaufen jeweils gerade, ihre Mittellinien m₆ₐ schließen mit der Umfangsrichtung jeweils einen Winkel α ein, welcher in sämtlichen Rillenabschnitten 6a gleich groß ist und 75° bis 85° beträgt. Die ebenfalls gerade verlaufenden Rillenabschnitte 6b der Querrillen 6 in den mittleren Blockreihen 3 weisen Mittellinien m_{6b} auf, die jeweils unter einem Winkel β von 55° bis 65° zur Umfangsrichtung verlaufen. Die Rillenabschnitte 6c in der zentralen Blockreihe 4 setzen sich jeweils symmetrisch zur Mittelumfangslinie A-A aus zwei gerade verlaufenden Teilabschnitten 6c₁ und 6c₂ zusammen, die an der Linie A-A aneinander anschließen, flach V-förmig zueinander verlaufen und Mittellinien m_{6c1}, m_{6c2} aufweisen, die mit der Umfangsrichtung des Laufstreifens, gegensinnig zueinander geneigt, jeweils einen Winkel γ einschließen, welcher 70° bis 80° beträgt und insbesondere um 10° bis 20° größer ist als der Winkel β.

Die Rillenabschnitte 6a, 6b und 6c weisen jeweils eine konstante oder nahezu konstante Breite b₆ₐ (Rillenabschnitte 6a), b_{6b} (Rillenabschnitte 6b) und b_{6c} (Rillenabschnitte 6c bzw. 6c₁ und 6c₂) auf, wobei die Breiten b₆ₐ, b_{6b} und b_{6c} zwischen den an der Laufstreifenperipherie vorliegenden Randkanten der Rillenabschnitte 6a, 6b und 6c ermittelt sind. Die Breite b₆ₐ der Rillenabschnitte 6a beträgt 4,00 mm bis 8,00 mm, die Breite b_{6b} der Rillenabschnitte 6b 3,00 mm bis 6,00 mm. Bei der dargestellten Ausführung sind die Rillenabschnitte 6a derart ausgeführt, dass ihre Breite b₆ₐ an den Laufstreifenrändern l am größten ist, wobei die Breite b₆ₐ der Rillenabschnitte 6a bis zu ihren Einmündungsbereichen in die angrenzende Umfangsrillen 5 um 2 % bis 5 % geringer als ist ihre Breite an der erwähnten breitesten Stelle. Die Rillenabschnitte 6b weisen an ihren Einmündungsbereichen zur weiter laufstreifenaußenseitig befindlichen Umfangsrille 5 ihre größte Breite b_{6b} auf, wobei die Breite b_{6b} in Richtung zu den Einmündungsbereichen in die weiter laufstreifeninnenseitig befindliche Umfangsrille 5 kontinuierlich abnimmt und hier 80 % bis 90 % der größten Breite beträgt. Die Breite b_{6c} der Rillenabschnitte 6c bzw. ihrer Teilabschnitte 6c₁ und 6c₂ ist konstant und beträgt 3,00 mm bis 4,00 mm.

Die Rillenabschnitte 6c der Querrillen 6 in der zentralen Blockreihe 4 und die Rillenabschnitte 6b der Querrillen 6 in den mittleren Blockreihen 3 weisen bevorzugt übereinstimmende Tiefen auf, die jeweils konstant sind bzw. von der Laufstreifenmitte aus abnehmen und zumindest 80 %, insbesondere 90 % bis 100 % der Profiltiefe betragen. Die Rillenabschnitte 6a der Querrillen 6 in den schulterseitigen Blockreihen 2 weisen insbesondere über etwa 50 % ihrer bei der Umfangsrille 5 beginnenden Erstreckungslänge eine Tiefe auf, die der Tiefe der Rillenabschnitte 6b und 6c, wie beschrieben, entspricht. In Richtung zu den Laufstreifenrändern l und in den außerhalb dieser Ränder befindlichen Reifenschultern nimmt die Tiefe der Querrillen 6 in bekannter Weise kontinuierlich ab.

Bezüglich der Breite B betrachtet weisen die schulterseitigen Blockreihen 2 bzw. ihre Profilblöcke 2a ferner eine in die axiale Richtung projizierte größte Breite B₂ von 23 % bis 30 % der Breite B, die mittleren Blockreihen 3 bzw. ihre Profilblöcke 3a eine in die axiale Richtung projizierte größte Breite B₃ von 12 % bis 18 % der Breite B und die zentrale Blockreihe 4 bzw. ihre Profilblöcke 4a eine in die axiale Richtung projizierte größte Breite B₄ von 12 % bis 16 % der Breite B auf. Die Breite B₂ ist somit größer als die Breiten B₃ und B₄, wobei die Breite B₃ vorzugsweise größer ist als die Breite B₄.

Die Umfangsrillen 5 weisen jeweils eine zwischen ihren Randkanten an der Laufstreifenperipherie ermittelte konstante Breite Bu auf, die 4,50 mm bis 10,00 mm beträgt. Die Umfangsrillen 5 setzen sich ferner innerhalb ihrer zwischen einander benachbarten Profilblöcken 2a - 3a, 3a - 4a verlaufenden Abschnitten aus jeweils zwei zur Umfangsrichtung unter einem Winkel δ von 2° bis 5° orientierten langen Teilabschnitten 5a und einem diese verbindenden kurzen Teilabschnitt 5b zusammen, welcher unter einem Winkel δ' von 25° bis 35° zur Umfangsrichtung verläuft. Die Neigung der Teilabschnitte 5a, 5b ist in den beiden Laufstreifenhälften gegensinnig zueinander. Die Ausgestaltung der Längen und der Winkelungen der Teilabschnitte 5a, 5b ist derart, dass über den Umfang des Reifens eine ununterbrochene Durchsicht durch die Umfangsrillen 5 möglich ist.

Nachdem es sich bei der bevorzugten Ausführung des Fahrzeugreifens um einen Winterreifen bzw. Ganzjahresreifen handelt, sind sämtliche Profilblöcke 2a, 3a und 4a jeweils mit einer Anzahl von Einschnitten 7 versehen, die sich jeweils parallel zueinander und parallel zu den Querrillenabschnitten 6a, 6b und 6c erstrecken. Bei der gezeigten Ausführung sind ferner sämtliche Einschnitte 7 in Draufsicht gerade verlaufende Einschnitte, bei alternativen Ausführungen in Wellenform bzw. Zickzackform verlaufende Einschnitte.

### Bezugszeichenliste

- 1: Laufstreifen
- 2: schulterseitige Blockreihe
- 2a: Profilblock
- 3: mittlere Blockreihe
- 3a: Profilblock
- 4: zentrale Blockreihe
- 4a: Profilblock
- 5: Umfangsrille
- 5a, 5b: Teilabschnitt
- 6: Querrille
- 6a, 6b, 6c: Rillenabschnitt
- 6c₁, 6c₂: Teilabschnitt
- 7: Einschnitt
- α, β, γ, δ, δ': Winkel
- B: Breite des Laufstreifens 1
- Bu: Breite der Umfangsrillen
- B₂, B₃, B₄: Breite der Blockreihen
- b₆ₐ, b_{6b}: Breite der Rillenabschnitte 6a, 6b
- b_{6c}, b_{6c1}, b_{6c2}: Breite des Rillenabschnitts 6c und der Teilabschnitte 6_{c1}, 6_{c2}
- m₆ₐ, m_{6b}: Mittellinien der Rillenabschnitte 6a, 6b
- m_{6c1}, m_{6c2}: Mittellinien der Teilabschnitte 6_{c1}, 6_{c2}
- A-A: Mittelumfangslinie
- I: Laufstreifenrand
- R: Abrollrichtung bei Vorwärtsfahrt

## Patentansprüche

1. Fahrzeugreifen mit einem laufrichtungsgebunden gestalteten Laufstreifen (1) mit einer spiegelsymmetrisch oder annähernd spiegelsymmetrisch zur Mittelumfangslinie (A-A) des Laufstreifens (1) gestalteten Profilierung mit zwei schulterseitigen Blockreihen (2) und zwischen diesen, durch Umfangsrillen (5) voneinander getrennt, angeordneten weiteren Blockreihen (3, 4), wobei sämtliche Blockreihen (2, 3, 4) durch die Umfangsrillen (5) und durch über die Breite (B) des Laufstreifens (1) in der Bodenaufstandsfläche durchgehend und parallel zueinander verlaufenden Querrillen (6) in Profilblöcke (2a, 3a, 4a) gegliedert sind, wobei die Querrillen (6) jeweils annähernd gemäß einer einzigen Wellenlänge einer sinusartigen Welle mit einer einzigen Wellenbergspitze an der Mittelumfangslinie (A-A) verlaufen,
**dadurch gekennzeichnet,**
**dass** der Laufstreifen (1) eine zentrale, entlang der Mittelumfangslinie (A-A) des Laufstreifens (1) verlaufende Blockreihe (4) und zwischen dieser und den schulterseitigen Blockreihen (2) jeweils eine mittlere Blockreihe (3) aufweist, wobei die zentrale Blockreihe (4) eine in die axiale Richtung projizierte größte Breite (B₄) von 12 % bis 16 % der Breite (B) des Laufstreifens (1) aufweist und die schulterseitigen Blockreihen (2) die größte Breite (B₂) von allen Blockreihen (2, 3, 4) aufweisen.

2. Fahrzeugreifen nach Anspruch 1, **dadurch gekennzeichnet, dass** die schulterseitigen Blockreihen (2) eine in die axiale Richtung projizierte größte Breite (B₂) von 23 % bis 30 % der Breite (B) des Laufstreifens (1) und die mittleren Blockreihen (3) eine in die axiale Richtung projizierte größte Breite (B₃) von 12 % bis 18 % der Breite (B) des Laufstreifens (1) aufweisen.

3. Fahrzeugreifen nach Anspruch 1 oder 2, **dadurch gekennzeichnet, dass** sämtliche zwischen den Profilblöcken (2a, 3a, 4a) verlaufenden Rillenabschnitte (6a, 6b, 6c) der Querrillen (6) gerade verlaufen, wobei die Mittelinien (m₆ₐ) der Rillenabschnitte (6a) in den schulterseitigen Blockreihen (2) mit der Umfangsrichtung jeweils einen Winkel (α) einschließen, welcher 75° bis 85° beträgt und die Mittellinien(m_{6b}) der Rillenabschnitte (6b) der Querrillen (6) in den mittleren Blockreihen (3) jeweils unter einem Winkel (β) von 55° bis 65° zur Umfangsrichtung verlaufen.

4. Fahrzeugreifen nach einem der Ansprüche 1 bis 3, **dadurch gekennzeichnet, dass** sich die Rillenabschnitte (6c) in der zentralen Blockreihe (4) jeweils symmetrisch zur Mittelumfangslinie (A-A) aus zwei gerade verlaufenden Teilabschnitten (6c₁, 6c₂) zusammensetzen, die an der Mittelumfangslinie (A-A) flach V-förmig zueinander verlaufend aneinander anschließen und Mittellinien (m_{6c1}, m_{6c2}) aufweisen, die mit der Umfangsrichtung des Laufstreifens, gegensinnig zueinander geneigt, jeweils einen Winkel (γ) einschließen, welcher 70° bis 80° beträgt.

5. Fahrzeugreifen nach einem der Ansprüche 1 bis 4, **dadurch gekennzeichnet, dass** die Rillenabschnitte (6c) in der zentralen Blockreihe (4) eine zwischen ihren Randkanten an der Laufstreifenperipherie ermittelte konstante Breite (b_{6c}) von 4,00 mm bis 5,00 mm aufweisen, welche geringer ist als die Breiten (b₆ₐ, b_{6b}) der Rillenabschnitte (6a, 6b) der Querrillen (6) in den mittleren und den schulterseitigen Blockreihen (2, 3).

6. Fahrzeugreifen nach einem der Ansprüche 1 bis 5, **dadurch gekennzeichnet, dass** die Umfangsrillen (5) jeweils eine zwischen ihren Randkanten an der Laufstreifenperipherie ermittelte konstante Breite (Bu) aufweisen, die 4,50 mm bis 10,00 mm beträgt, und sich innerhalb ihrer zwischen einander benachbarten Profilblöcken (2a - 3a, 3a - 4a) verlaufenden Abschnitten aus jeweils zwei zur Umfangsrichtung unter einem Winkel (δ) von 2° bis 5° orientierten langen Teilabschnitten (5a) und einem diese verbindenden kurzen Teilabschnitt 5b zusammensetzen, welcher unter einem Winkel (δ') von 25° bis 35° zur Umfangsrichtung verläuft, wobei die Teilabschnitte (5a, 5b) derart gestaltet sind, dass über den Umfang des Laufstreifens (1) eine nicht unterbrochene Durchsicht durch die Umfangsrillen (5) möglich ist.
